(19) Europäisches Patentamt
European Patent Office
Office européen des brevets

(11) EP 4 144 799 B1

(12) **EUROPEAN PATENT SPECIFICATION**

(45) Date of publication and mention of the grant of the patent:
**11.06.2025 Bulletin 2025/24**

(21) Application number: **21795730.7**

(22) Date of filing: **26.04.2021**

(51) International Patent Classification (IPC):
***C08L 69/00*** *(2006.01)* ***C08L 51/04*** *(2006.01)*
***C08L 51/00*** *(2006.01)* ***C08L 25/12*** *(2006.01)*
***C08K 3/22*** *(2006.01)*

(52) Cooperative Patent Classification (CPC):
(C-Sets available)
**C08L 69/00;** C08K 2003/2296; C08K 2201/003;
C08K 2201/006; C08L 25/12 (Cont.)

(86) International application number:
**PCT/KR2021/005265**

(87) International publication number:
**WO 2021/221414 (04.11.2021 Gazette 2021/44)**

(54) **THERMOPLASTIC RESIN COMPOSITION AND MOLDED PRODUCT USING SAME**
THERMOPLASTISCHE HARZZUSAMMENSETZUNG UND FORMPRODUKT DAMIT
COMPOSITION DE RÉSINE THERMOPLASTIQUE ET PRODUIT MOULÉ UTILISANT CELLE-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.04.2020 KR 20200052937**

(43) Date of publication of application:
**08.03.2023 Bulletin 2023/10**

(73) Proprietor: **Lotte Chemical Corporation**
**Seoul, 05551 (KR)**

(72) Inventor: **RYOO, Heekyoung**
**Uiwang-si, Gyeonggi-do 16073 (KR)**

(74) Representative: **Germain Maureau**
**12, rue Boileau**
**69006 Lyon (FR)**

(56) References cited:
**CN-A- 101 899 204**
**KR-A- 20170 086 074**
**KR-A- 20190 125 950**
**US-A- 5 281 665**
**US-A1- 2006 094 822**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

**(Cont. next page)**

(52) Cooperative Patent Classification (CPC): (Cont.)

C-Sets
**C08L 69/00, C08L 25/12, C08L 51/04, C08L 51/06, C08K 3/22**

## Description

### [Technical Field]

It relates to a thermoplastic resin composition and a molded product using the same.

### [Background Art]

A polycarbonate resin is one of engineering plastics, and is a material that is widely used in the plastics industry.

The polycarbonate resin has a glass transition temperature (Tg) of about 150 °C due to a bulk molecular structure, such as bisphenol-A, which shows high heat resistance and may be a non-crystalline polymer having excellent transparency.

Furthermore, although having excellent impact resistance and compatibility with other resins, the polycarbonate resin has a drawback of low fluidity, so it is frequently used in a form of an alloy with various resins for complementing moldability and post-processability.

Among them, a polycarbonate/acrylonitrile-butadiene-styrene (PC/ABS) alloy resin has excellent durability, moldability, heat resistance, impact resistance, and the like, and thus may be applied in a wide range of applications such as an electrical/electronic field, an automobile field, a construction field, and miscellaneous consumer products, and may be, for example, applied to interior/exterior materials for automobiles.

However, when a molded product made of the PC/ABS alloy resin is used where it contacts with parts made of other resins such as polyethylene, polyvinyl chloride, and the like or other members such as lining sheets of a chloroprene rubber, a natural rubber, polyester, polyethylene, and the like, foams, or the like and rubs against each other, friction noises may occur.

Since a styrene-based copolymer included in the PC/ABS alloy resin is amorphous and thus has a higher friction coefficient than a crystalline material such as polyethylene, polypropylene, polyacetal, and the like, and for example, when the molded product is fit with a member made of other resins, for example, an air conditioner vent, a stereo button, or the like in a car, the friction noises may be generated due to a stick-slip phenomenon caused by the large friction coefficient.

In recent years, as the demand for electric vehicles, which generate relatively less noises when driving, increases, the friction noises may emerge as a major cause of impairing comfort and quietness of riding. Accordingly, there is a need to develop automotive interior materials with excellent friction noise reduction characteristics.

On the other hand, an acrylate-styrene-acrylonitrile (ASA) resin has excellent weather resistance and light resistance, and thus it is widely used in outdoor construction materials, automobile interior/exterior materials, and the like. However, since the ASA resin has insufficient impact resistance and the like, in order to be applied for the uses requiring high impact strength, a content of the acrylic rubbery polymer of the ASA resin should be increased, but when the content of the acrylic rubbery polymer is increased, heat resistance and the like are deteriorated, and accordingly, the ASA resin has a limit in being applied for the use requiring high heat resistance properties, for example, the automobile interior/exterior materials, etc.

Accordingly, a method for securing excellent heat resistance, impact resistance, weather resistance, and light resistance by alloying the aforementioned polycarbonate resin with an ASA resin has been proposed, and this PC/ASA alloy resin may be applied to various interior/exterior materials for automobiles.

However, a molded product using this PC/ASA alloy resin, like a case of using other resins, has a risk of propagation of various bacteria on the surface over time. Accordingly, in order to improve antibacterial properties and the like, a method of adding an additive such as an antibacterial agent and the like to the PC/ASA alloy resin may be considered but deteriorate compatibility, impact resistance, and the like and in addition, generate excessive gas due to decomposition of the resin during the injection molding.

Accordingly, there is a need to develop a thermoplastic resin composition having excellent friction noise reduction characteristics and simultaneously, excellent antibacterial properties, impact resistance, and the like.

KR10-2017-0086074 A discloses an ethylene-vinyl acetate copolymer resin composition, comprising:

an (A) ethylene-vinyl acetate copolymer;
a (B) vinyl copolymer; and
a (C) organic peroxide, wherein
the (B) vinyl copolymer and the (C) organic peroxide are impregnated in the (A) ethylene-vinyl acetate copolymer,
the (A) ethylene-vinyl acetate copolymer includes 1 to 20 wt % of a vinyl acetate,
the (B) vinyl copolymer is formed of a (b-1) styrene, (b-2) at least one of acrylonitrile and glycidyl methacrylate, a (b-3) t-butylperoxymethacryloyloxyethyl carbonate, and a (b-4) polymerization initiator, and
a content of the (C) organic peroxide is 0.1 to 3 parts by weight relative to 100 parts by weight of the (A) ethylene-vinyl acetate copolymer.

CN101899204A discloses an antistatic PC/ASA alloy material, it is characterized in that, comprise following component and content: polycarbonate 50-80wt%, ASA resin 5-20wt%, SAN resin 0-15wt%, toughner 1-5wt%, static inhibitor 7-20wt%, four acicular type zinc oxide crystal whisker 1-5wt%, oxidation inhibitor 0.1-1wt%, lubricant 0.1-2wt%.

**[Disclosure]**

[Technical Problem]

The present invention is to provide a thermoplastic resin composition having excellent friction noise reduction characteristics, antibacterial properties, and impact resistance, and a molded product using the same.

[Technical Solution]

The thermoplastic resin composition includes, based on 100 parts by weight of base resin including (A) 75 to 85 wt% of a polycarbonate resin, (B) 7 to 13 wt% of an acrylic rubber modified aromatic vinyl-vinyl cyanide graft copolymer, and (C) 7 to 13 wt% of an aromatic vinyl-vinyl cyanide copolymer, (D) 1 to 5 parts by weight of zinc oxide (ZnO), and (E) 3 to 5 parts by weight of a polyolefin-aromatic vinyl-glycidyl (meth)acrylate graft copolymer.

The (A) polycarbonate resin may have a weight average molecular weight of 10,000 to 200,000 g/mol.

In the (B) acrylic rubber modified aromatic vinyl-vinyl cyanide graft copolymer, an average particle diameter of the acrylic rubbery polymer may be 200 to 500 nm.

The (B) acrylic rubber modified aromatic vinyl-vinyl cyanide graft copolymer may have a core-shell structure includes a core including an acrylic rubbery polymer and a shell formed by graft polymerization of a monomer mixture including an aromatic vinyl compound and a vinyl cyanide compound to the core.

The (B) acrylic rubber modified aromatic vinyl-vinyl cyanide graft copolymer may be an acrylate-styrene-acrylonitrile graft copolymer.

The (C) aromatic vinyl-vinyl cyanide copolymer may be a copolymer of a monomer mixture including 60 to 80 wt% of an aromatic vinyl compound and 20 to 40 wt% of a vinyl cyanide compound.

The (C) aromatic vinyl-vinyl cyanide copolymer may have a weight average molecular weight of 80,000 to 200,000 g/mol.

The (C) aromatic vinyl-vinyl cyanide copolymer may be a styrene-acrylonitrile copolymer.

The (D) zinc oxide may have an average particle diameter of 0.5 to 3 $\mu$m.

The (D) zinc oxide may have a BET specific surface area of 1 to 10 $m^2/g$.

The (D) zinc oxide may have a peak position 2$\theta$ value of 35 to 37° in X-ray diffraction (XRD) analysis, and a crystallite size value according to Equation 1 of 1,000 to 2,000 Å.

[Equation 1]

$$\text{Crystallite size (D)} = \frac{k\lambda}{\beta\cos\theta}$$

In Equation 1, k is a shape factor, $\lambda$ is an X-ray wavelength, $\beta$ is a FWHM value (degree) of an X-ray diffraction peak, and $\theta$ is a peak position value (peak position degree).

The (D) zinc oxide may have a size ratio (B/A) of a peak A in a 370 to 390 nm region to a peak B in a 450 to 600 nm region of 0.01 to 1 when measuring photoluminescence.

The (E) polyolefin-aromatic vinyl-glycidyl (meth)acrylate graft copolymer may be one in which an aromatic vinyl-glycidyl (meth)acrylate copolymer is grafted to a polyolefin main chain.

The polyolefin may be a polyethylene (PE) or an ethylene-vinyl acetate copolymer (EVA) and the aromatic vinyl-glycidyl (meth)acrylate copolymer may be a styrene-glycidyl methacrylate copolymer.

The thermoplastic resin composition may further include at least one additive selected from a nucleating agent, a coupling agent, a filler, a plasticizer, a lubricant, a release agent, an antibacterial agent, a heat stabilizer, an antioxidant, an ultraviolet (UV) stabilizer, a flame retardant, an antistatic agent, an impact modifier, a dye, and a pigment.

The present invention also provides a molded product manufactured from the thermoplastic resin composition.

The molded product may have a squeak noise of 1 to 4 measured after being left at 80 °C for 300 hours according to VDA 230-206.

The molded product may have each antibacterial activity value of 2 to 7 which is obtained by inoculating Staphylococcus aureus and Escherichia coli, and measuring after 24 hours of incubation under the condition of 35 °C and RH of 90% according to the JIS Z 2801 antibacterial evaluation method.

The molded product may have a 1/8" thick notched Izod impact strength of 30 to 100 kgf-cm/cm according to ASTM D256.

[Advantageous Effects]

Since the thermoplastic resin composition and a molded product using the same have excellent friction noise reduction properties, antibacterial properties, and impact resistance, they may be usefully applied to automobiles, such as interior materials of electric vehicles, which require great friction noise reduction and antibacterial properties particularly.

**[Description of the Drawings]**

FIG. 1 is a schematic view of the basic principle of VDA 230-206.

**[Mode for Invention]**

Hereinafter, embodiments of the present invention are described in detail. However, these embodiments are exemplary, the present invention is not limited thereto and the present invention is defined by the scope of claims.
In the present specification, "copolymerization" refers to block copolymerization to random copolymerization and "copolymer" refers to a block copolymer to a random copolymer.
In the present invention, unless otherwise mentioned, "an average particle diameter" of the rubbery polymer refers to a volume average diameter, and means a Z-average particle diameter measured using a dynamic light scattering analyzer.
In the present invention, unless otherwise mentioned, "an average particle diameter of zinc oxide" is a particle diameter (D50) corresponding to 50 % of a weight percentage in a particle size distribution curve of single particles (particles do not aggregate to form secondary particles), which are measured by using a particle size analyzer (Laser Diffraction Particle Size Analyzer LS I3 320 equipment, Beckman Coulter, Inc.).
In the present invention, unless otherwise mentioned, "a weight average molecular weight" is measured by dissolving a powder sample in tetrahydrofuran (THF) and performing gel permeation chromatography (GPC) with a 1200 series made by Agilent Technologies Inc. (a column: LF-804 made by Shodex, a standard sample: polystyrene made by Shodex).
In the present invention, unless otherwise mentioned, "a specific surface area" is measured using a nitrogen gas adsorption method with BET analysis equipment (Surface Area and Porosity Analyzer ASAP 2020 equipment manufactured by Micromeritics).
According to the present invention, provided is a thermoplastic resin composition including, based on 100 parts by weight of base resin including (A) 75 to 85 wt% of a polycarbonate resin, (B) 7 to 13 wt% of an acrylic rubber modified aromatic vinyl-vinyl cyanide graft copolymer, and (C) 7 to 13 wt% of an aromatic vinyl-vinyl cyanide copolymer, (D) 1 to 5 parts by weight of zinc oxide (ZnO), and (E) 3 to 5 parts by weight of a polyolefin-aromatic vinyl-glycidyl (meth)acrylate graft copolymer.
Hereinafter, each component included in the thermoplastic resin composition will be described in detail.

**(A) Polycarbonate Resin**

The polycarbonate (PC) resin is a polyester having a carbonate bond but has no particular limit in its type, and may include any polycarbonate resin usable in the resin composition field.
For example, it may be prepared by reacting diphenols represented by Chemical Formula 1 with a compound selected from phosgene, halogen acid esters, carbonate esters, and a combination thereof.

[Chemical Formula 1]

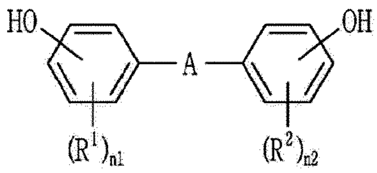

**In** Chemical Formula 1,
A is a linking group selected from a single bond, a substituted or unsubstituted C1 to C30 alkylene group, a substituted or

unsubstituted C2 to C5 alkenylene group, a substituted or unsubstituted C2 to C5 alkylidene group, a substituted or unsubstituted C1 to C30 haloalkylene group, a substituted or unsubstituted C5 to C6 cycloalkylene group, a substituted or unsubstituted C5 to C6 cycloalkenylene group, a substituted or unsubstituted C5 to C10 cycloalkylidene group, a substituted or unsubstituted C6 to C30 arylene group, a substituted or unsubstituted C1 to C20 alkoxylene group, a halogenic acid ester group, a carbonate ester group, CO, S, and $SO_2$, wherein $R^1$ and $R^2$ are each independently a substituted or unsubstituted C1 to C30 alkyl group or a substituted or unsubstituted C6 to C30 aryl group, and n1 and n2 are each independently an integer of 0 to 4.

Two or more types of the diphenols represented by Chemical Formula 1 may be combined to constitute a repeating unit of the polycarbonate resin.

Specific examples of the diphenols may be 4,4'-dihydroxydiphenyl, 2,2-bis(4-hydroxyphenyl)propane (also referred to as "bisphenol-A"), 2,4-bis(4-hydroxyphenyl)-2-methylbutane, bis(4-hydroxyphenyl)methane, 1,1-bis(4-hydroxyphenyl)cyclohexane, 2,2-bis(3-chloro-4-hydroxyphenyl)propane, 2,2-bis(3-methyl-4-hydroxyphenyl)propane, 2,2-bis(3,5-dimethyl-4-hydroxyphenyl)propane, 2,2-bis(3,5-dichloro-4-hydroxyphenyl)propane, 2,2-bis(3,5-dibromo-4-hydroxyphenyl)propane, bis(4-hydroxyphenyl)sulfoxide, bis(4-hydroxyphenyl)ketone, bis(4-hydroxyphenyl)ether, and the like. Among the diphenols, 2,2-bis(4-hydroxyphenyl)propane, 2,2-bis(3-methyl-4-hydroxyphenyl)propane, 2,2-bis(3,5-dimethyl-4-hydroxyphenyl)propane, 2,2-bis(3,5-dichloro-4-hydroxyphenyl)propane, or 1,1-bis(4-hydroxyphenyl)cyclohexane may be desirably used. 2,2-bis(4-hydroxyphenyl)propane may be more desirably used.

The polycarbonate resin may be a mixture of copolymers obtained using two or more dipenols.

In addition, the polycarbonate resin may be a linear polycarbonate resin, a branched polycarbonate resin, a polyester-carbonate copolymer resin, and the like.

Specific examples of the linear polycarbonate resin may be a bisphenol-A polycarbonate resin. Specific examples of the branched polycarbonate resin may be a resin prepared by reacting a multi-functional aromatic compound such as trimellitic anhydride, trimellitic acid, and the like with diphenols and a carbonate. The polyester-carbonate copolymer resin may be prepared by reacting bifunctional carboxylic acid with diphenols and carbonate, wherein the used carbonate is diaryl carbonate such as diphenyl carbonate or ethylene carbonate.

The polycarbonate resin may be prepared using an interfacial polymerization method (also called a solvent method or a phosgene method), a melt polymerization method, or the like.

**It** is effective to use the polycarbonate resin having, desirably, a weight average molecular weight of 10,000 to 200,000 g/mol, for example 10,000 to 90,000 g/mol, for example 14,000 to 90,000 g/mol, for example 14,000 to 80,000 g/mol, for example 14,000 to 70,000 g/mol, for example 14,000 to 60,000 g/mol, for example 14,000 to 50,000 g/mol, for example 14,000 to 40,000 g/mol. When the weight average molecular weight of the polycarbonate resin is within the above range, a molded product manufactured therefrom can have excellent impact resistance and fluidity.

The polycarbonate resin may be included in an amount of 75 to 85 wt%, for example 75 to 83 wt%, for example 75 to 81 wt%, for example 75 to 80 wt%, for example 77 to 85 wt%, for example 79 to 85 wt%, for example 80 to 85 wt% based on 100 wt% of the base resin. When the polycarbonate resin is less than 75 wt%, a mechanical strength of a molded product manufactured from the thermoplastic resin composition including the same is not good, and when it exceeds 85 wt%, the moldability may be deteriorated.

The polycarbonate resin has a melt flow index measured at 250 °C, and 10 kg load condition according to ASTM D1238, for example, 11 to 15 g/10 min, for example 11 to 13 g/10 min, for example 13 to 15 g/10 min. When a polycarbonate resin having a melt flow index within the above range is used, a molded product using the same may obtain excellent impact resistance and fluidity.

However, an embodiment is not necessarily limited thereto. For example, the polycarbonate resin may be used by mixing two or more types of polycarbonate resins having different weight average molecular weights or melt flow indexes. By mixing and using polycarbonate resins of different weight average molecular weights or melt flow indexes, the thermoplastic resin composition may be controlled to have desired fluidity.

### (B) Acrylic Rubber Modified Aromatic Vinyl-Vinyl Cyanide Graft Copolymer

The acrylic rubber modified aromatic vinyl-vinyl cyanide graft copolymer is alloyed with a polycarbonate resin to enhance light resistance, weather resistance and impact resistance of the thermoplastic resin composition.

The acrylic rubber modified aromatic vinyl-vinyl cyanide graft copolymer has a core-shell structure including a core including an acrylic rubbery polymer and a shell formed by graft polymerization of a monomer mixture including an aromatic vinyl compound and a vinyl cyanide compound to the core.

The acrylic rubber modified aromatic vinyl-vinyl cyanide graft copolymer may be prepared according to any preparation method known to those skilled in the art.

The preparation method may include conventional polymerization methods, for example, emulsion polymerization, suspension polymerization, solution polymerization, and bulk polymerization. As a non-limiting example, it may be prepared by a method including preparing an acrylic rubbery polymer, and then graft-polymerizing a monomer mixture

including an aromatic vinyl compound and a vinyl cyanide compound may be on a core formed of one or more layers of the acrylic rubbery polymer to form one or more shells.

The acrylic rubbery polymer may be prepared using an acrylic monomer as a main monomer. The acrylic monomer may be at least one selected from ethyl acrylate, butyl acrylate, and 2-ethylhexyl acrylate, but is not limited thereto.

The acrylic monomer may be copolymerized with one or more other radically polymerizable monomers. In the case of copolymerization, an amount of the one or more radically polymerizable other monomers may be 5 to 30 wt%, for example, 10 to 20 wt%, based on the total weight of the acrylic rubbery polymer.

The aromatic vinyl compound included in the shell may be at least one selected from styrene, $\alpha$-methylstyrene, p-methylstyrene, p-t-butylstyrene, 2,4-dimethylstyrene, chlorostyrene, vinyltoluene, and vinylnaphthalene, but is not limited thereto.

The vinyl cyanide compound included in the shell may be at least one selected from acrylonitrile, methacrylonitrile, and fumaronitrile, but is not limited thereto.

Based on the total of 100 wt% of the acrylic rubber modified aromatic vinyl-vinyl cyanide graft copolymer, an amount of the acrylic rubbery polymer may be 40 to 60 wt%, for example 45 to 55 wt%.

Meanwhile, in the shell, the aromatic vinyl compound and the vinyl cyanide compound may be copolymerized in a weight ratio of 6:4 to 8:2.

In an embodiment, the acrylic rubber modified aromatic vinyl-vinyl cyanide graft copolymer may be an acrylate-styrene-acrylonitrile graft copolymer (g-ASA).

In an embodiment, in the acrylic rubber modified aromatic vinyl-vinyl cyanide graft copolymer, an average particle diameter of the acrylic rubbery polymer may be greater than or equal to 200 nm, for example greater than or equal to 250 nm, or for example greater than or equal to 300 nm, and for example less than or equal to 500 nm, for example less than or equal to 450 nm, or for example less than or equal to 400 nm, for example 200 to 500 nm, for example 250 to 450 nm, for example 300 to 400 nm.

When the average particle diameter of the acrylic rubbery polymer in the acrylic rubber modified aromatic vinyl-vinyl cyanide graft copolymer is less than 200 nm, the impact resistance of a molded product manufactured from the thermoplastic resin composition including the same may be lowered.

On the other hand, when the average particle diameter of the acrylic rubbery polymer in the acrylic rubber modified aromatic vinyl-based graft copolymer exceeds 500 nm, gloss and appearance characteristics of a molded product manufactured from the thermoplastic resin composition including the same may be deteriorated.

The acrylic rubber modified aromatic vinyl-vinyl cyanide graft copolymer may be greater than or equal to 7 wt%, greater than or equal to 8 wt%, greater than or equal to 9 wt%, or greater than or equal to 10 wt% and less than or equal to 13 wt%, less than or equal to 12 wt%, or less than or equal to 11 wt%, based on 100 wt% of the base resin.

When the amount of the acrylic rubber modified aromatic vinyl-vinyl cyanide graft copolymer in the base resin is less than 7 wt%, an impact resistance of the molded product manufactured from the thermoplastic resin composition containing the same may decrease, and when it exceeds 13 wt%, mechanical strength and coloring properties of the molded product manufactured from the thermoplastic resin composition may be lowered.

### (C) Aromatic Vinyl-Vinyl Cyanide Copolymer

The aromatic vinyl-vinyl cyanide copolymer functions to maintain compatibility between components of the thermoplastic resin composition at a certain level.

In an embodiment, the aromatic vinyl-vinyl cyanide copolymer may be a copolymer of a monomer mixture including 60 to 80 wt% of an aromatic vinyl compound and 20 to 40 wt% of a vinyl cyanide compound. The aromatic vinyl-vinyl cyanide copolymer has a weight average molecular weight of 80,000 g/mol or more, for example 85,000 g/mol or more, for example 90,000 g/mol or more, and for example less than or equal to 200,000 g/mol, or for example less than or equal to 150,000 g/mol, for example 80,000 to 200,000 g/mol, for example 80,000 to 150,000 g/mol.

The aromatic vinyl compound may be at least one selected from styrene, $\alpha$-methylstyrene, p-methylstyrene, p-t-butylstyrene, 2,4-dimethylstyrene, chlorostyrene, vinyltoluene, and vinylnaphthalene, but is not limited thereto.

The vinyl cyanide compound may be at least one selected from acrylonitrile, methacrylonitrile, and fumaronitrile, but is not limited thereto.

In an embodiment, the aromatic vinyl-vinyl cyanide copolymer may be a styrene-acrylonitrile copolymer (SAN).

In an embodiment, based on 100 wt% of the aromatic vinyl-vinyl cyanide copolymer, the component derived from the aromatic vinyl compound may be included in an amount of greater than or equal to 60 wt%, for example greater than or equal to 65 wt%, for example greater than or equal to 70 wt% and less than or equal to 80 wt%, for example less than or equal to 75 wt%, for example 60 to 80 wt%, for example 70 to 75 wt%.

In an embodiment, based on 100 wt% of the aromatic vinyl-vinyl cyanide copolymer, the component derived from the vinyl cyanide compound may be included in an amount of greater than or equal to 20 wt%, for example greater than or

equal to 25 wt%, and for example less than or equal to 40 wt%, for example less than or equal to 35 wt%, for example less than or equal to 30 wt%, for example 20 to 40 wt%, or for example 25 to 30 wt%.

In an embodiment, the aromatic vinyl-vinyl cyanide copolymer may be included in an amount of greater than or equal to 7 wt%, greater than or equal to 8 wt%, greater than or equal to 9 wt%, or greater than or equal to 10 wt% and less than or equal to 13 wt%, less than or equal to 12 wt%, of less than or equal to 11 wt% based on 100 wt% of the base resin.

If the aromatic vinyl-vinyl cyanide copolymer is less than 7 wt%, mechanical strength and heat resistance of a molded product manufactured from the thermoplastic resin composition including the same may decrease, and if it exceeds 13 wt%, impact resistance may be deteriorated.

### (D) Zinc Oxide

The zinc oxide functions to improve antibacterial properties of the thermoplastic resin composition and a molded product manufactured therefrom.

In an embodiment, the zinc oxide may have an average particle diameter of greater than or equal to 0.5 μm, for example greater than or equal to 0.8 μm, or for example greater than or equal to 1 μm, and for example less than or equal to 5 μm, for example less than or equal to 4 μm, or for example less than or equal to 3 μm, or for example 0.5 to 5 μm, for example 0.5 to 4 μm, for example 0.5 to 3 μm, or for example 0.8 to 3 μm.

In an embodiment, the zinc oxide may have a BET specific surface area of greater than or equal to 1 $m^2/g$, and for example less than or equal to 10 $m^2/g$, for example less than or equal to 9 $m^2/g$, for example less than or equal to 8 $m^2/g$, or for example less than or equal to 7 $m^2/g$, or for example 1 to 10 $m^2/g$, or for example 1 to 7 $m^2/g$.

When the average particle diameter and/or BET specific surface area of the zinc oxide is out of the above range, light resistance of the thermoplastic resin composition including the zinc oxide and a molded product manufactured therefrom may be deteriorated.

In an embodiment, the purity of the zinc oxide as measured from a residual weight at a temperature of 800 °C using TGA thermal analysis may be greater than or equal to 99 %.

In an embodiment, the zinc oxide may have a peak position 2θ value obtained by X-ray diffraction (XRD) analysis of 35 ° to 37 °, and a crystallite size of 1,000 to 2,000 Å, for example 1,200 to 1,800 Å, which is calculated based on the measured FWHM value (full width at half maximum of the diffraction peak) by applying to Scherrer's equation (Equation 1).

Specifically, the crystallite size may be measured by using a high resolution X-ray diffractometer (PRO-MRD, X'pert) regardless of a specimen type (e.g., powder form, injection molding specimen). On the other hand, when an injection molding specimen is used, XRD may be more accurately analyzed by heat-treating the specimen at 600 °C in the air for 2 hours to remove a residual polymer resin.

When the peak position and crystallite size of the zinc oxide are out of the above ranges, light resistance, antibacterial properties, and the like of the thermoplastic resin composition and molded product manufactured therefrom may be deteriorated.

[Equation 1]

$$\text{Crystallite size(D)} = \frac{k\lambda}{\beta\cos\theta}$$

In Equation 1, k is a shape factor, λ is an X-ray wavelength, β is a FWHM value (degree) of an X-ray diffraction peak, and θ is a peak position value (peak position degree).

In an embodiment, the zinc oxide may have various shapes, for example, a spherical shape, a plate shape, a rod shape, and a combination thereof.

In an embodiment, the zinc oxide may have a size ratio (B/A) of a peak A in a 370 to 390 nm region to a peak B in a 450 to 600 nm region when measuring photoluminescence of 0.01 to 1, for example 0.1 to 1, or specifically 0.1 to 0.5.

The photoluminescence may be measured by putting zinc oxide powder in a pelletizer with a diameter of 6 mm and compressing it to prepare a specimen in a flat state and then, irradiating the specimen by an He-Cd laser at a wavelength of 325 nm (30 mW, KIMMON KOHA) at room temperature and detecting a spectrum of light emitted therefrom with a CCD detector, wherein the CCD detector may be maintained at -70 °C.

In the above range, the thermoplastic resin composition and a molded product manufactured therefrom may exhibit excellent light resistance and antibacterial properties.

In an embodiment, the zinc oxide may be prepared by melting metallic zinc and then, heating it at 850 to 1,000 °C, for example 900 to 950 °C to evaporate it, injecting oxygen gas thereinto, cooling it to 20 to 30 °C, and then, heating it at 400 to 900 °C, for example 500 to 800 °C for 30 to 150 minutes, for example 60 to 120 minutes.

In an embodiment, the zinc oxide may be included in an amount of, for example 1 to 5 parts by weight, for example

2 to 5 parts by weight, for example 3 to 5 parts by weight, for example 4 to 5 parts by weight, for example 1 to 4 parts by weight, for example 1 to 3 parts by weight, for example 1 to 2 parts by weight, for example 2 to 4 parts by weight, for example 2 to 3 parts by weight, for example 3 to 4 parts by weight based on 100 parts by weight of the base resin.

When an amount of the zinc oxide is less than 1 part by weight, light resistance, antibacterial properties, and impact resistance of the thermoplastic resin composition and molded product manufactured therefrom may be deteriorated, while when it is greater than 5 parts by weight, light resistance, and thermal discoloration stability of the thermoplastic resin composition and molded product manufactured therefrom may be deteriorated.

## (E) Polyolefin-Aromatic Vinyl-Glycidyl (meth)acrylate Graft Copolymer

The polyolefin-aromatic vinyl-glycidyl (meth)acrylate graft copolymer may lower a friction coefficient of the thermoplastic resin composition and a molded product using the same and also improve friction noise reduction sustainability to exhibit excellent friction noise reduction characteristics.

In an embodiment, the polyolefin-aromatic vinyl-glycidyl (meth)acrylate graft copolymer may be one in which an aromatic vinyl-glycidyl (meth)acrylate copolymer is grafted to a polyolefin main chain.

The polyolefin including the polyolefin-aromatic vinyl-glycidyl (meth)acrylate graft copolymer may be a polyethylene (PE) or an ethylenevinylacetate copolymer (EVA).

The aromatic vinyl-glycidyl (meth)acrylate copolymer grafted onto the polyolefin main chain may be a copolymer of a monomer mixture including an aromatic vinyl compound and glycidyl (meth)acrylate.

The aromatic vinyl compound may be at least one selected from styrene, α-methylstyrene, p-methylstyrene, p-t-butylstyrene, 2,4-dimethylstyrene, chlorostyrene, vinyltoluene, and vinylnaphthalene, but is not limited thereto.

The glycidyl (meth)acrylate may be at least one selected from glycidyl acrylate and glycidyl methacrylate.

The aromatic vinyl-glycidyl (meth)acrylate copolymer may be, for example a copolymer of styrene and glycidyl acrylate, a copolymer of styrene and glycidyl methacrylate, a copolymer of α-methylstyrene and glycidyl acrylate, a copolymer of α-methylstyrene and glycidyl methacrylate, a copolymer of styrene, α-methylstyrene, and glycidyl acrylate, a copolymer of styrene, α-methylstyrene and glycidyl methacrylate, or a copolymer of styrene, α-methylstyrene, glycidyl acrylate and glycidyl methacrylate, for example a copolymer of styrene-glycidyl methacrylate. In this case, the styrene-glycidyl methacrylate copolymer may be a copolymer of a monomer mixture including 50 to 95 wt% of styrene and 5 to 50 wt% of glycidyl methacrylate.

For example, the polyolefin-aromatic vinyl-glycidyl (meth)acrylate graft copolymer may be at least one selected from a polyethylene-styrene-glycidyl methacrylate graft copolymer (PE-g-SGMA) and an ethylene-vinylacetate-styrene-glycidyl methacrylate graft copolymer (EVA-g-SGMA).

In an embodiment, the polyolefin-aromatic vinyl-glycidyl (meth)acrylate graft copolymer may include 70 wt% to 95 wt% of the polyolefin and 5 wt% to 30 wt% of the aromatic vinyl-glycidyl (meth)acrylate copolymer based on 100 wt% thereof.

The polyolefin-aromatic vinyl-glycidyl (meth)acrylate graft copolymer may be included in an amount of, for example 3 to 5 parts by weight, for example 4 to 5 parts by weight, or for example 3 to 4 parts by weight based on 100 parts by weight of a base resin. When the polyolefin-aromatic vinyl-glycidyl (meth)acrylate graft copolymer is included in an amount of less than 3 parts by weight, a molded product formed of a thermoplastic resin composition using the same may hardly express friction noise reduction characteristics, but when included in an amount of greater than 5 parts by weight, a molded product formed of a thermoplastic resin composition using the same may exhibit deteriorated mechanical properties such as rigidity and the like.

## (F) Other Additives

The thermoplastic resin composition according to an embodiment may further include one or more additives, if necessary, depending on the end use of the composition in addition to the components (A) to (E) in order to balance each of physical properties under conditions of maintaining all of excellent friction noise reduction characteristics, antibacterial properties, and mechanical properties.

Specifically, the additive may be at least one selected from a nucleating agent, a coupling agent, a filler, a plasticizer, a lubricant, a release agent, an antibacterial agent, a heat stabilizer, an antioxidant, an ultraviolet stabilizer, a flame retardant, an antistatic agent, an impact modifier, a dye, and a pigment.

These additives may be appropriately included within a range that does not impair the physical properties of the thermoplastic resin composition, and specifically, may be included in an amount of less than or equal to 20 parts by weight based on 100 parts by weight of the base resin, but are not limited thereto.

The thermoplastic resin composition according to the present invention may be prepared by a known method for preparing a thermoplastic resin composition.

On the other hand, the thermoplastic resin composition according to an embodiment may be mixed with other

resin or other rubber component and used together.

For example, the thermoplastic resin composition according to the present invention may be prepared in the form of pellets by simultaneously mixing the components of the present invention and other additives and then melt-kneading the same in an extruder.

The present invention provides a molded product manufactured using the thermoplastic resin composition.

The molded product may be produced by various methods known in the art, such as injection molding and extrusion molding using the thermoplastic resin composition.

In an embodiment, the molded product has squeak noises of RPN 1 to 4 when measured according to VDA 230-206 a standard of the German Automobile Industry Association, after allowed to stand in an 80 °C oven for about 300 hours, and thus may exhibit excellent friction noise reduction characteristics.

A specific evaluation method and result of the squeak noises will be described later in experimental examples.

In addition, the molded product are measured with respect to antibacterial activity according to the JIS Z 2801 antibacterial evaluation method by inoculating Staphylococcus aureus and Escherichia coli and incubating them at 35 °C for 24 hours under RH of 90%, which is respectively greater than or equal to 2, for example greater than or equal to 2.5, for example greater than or equal to 3, for example greater than or equal to 3.5, for example greater than or equal to 4, for example less than or equal to 7, for example less than or equal to 6.5, for example 2 to 7, for example 3 to 7, or for example 4 to 7.

In addition, the molded product may have a 1/8" thick notched Izod impact strength of greater than or equal to 30 kgf-cm/cm, for example greater than or equal to 31 kgf-cm/cm, for example greater than or equal to 32 kgf-cm/cm, for example greater than or equal to 33 kgf-cm/cm, for example greater than or equal to 34 kgf-cm/cm, for example greater than or equal to 35 kgf-cm/cm, for example greater than or equal to 36 kgf-cm/cm, for example greater than or equal to 37 kgf-cm/cm, for example greater than or equal to 38 kgf-cm/cm, for example greater than or equal to 39 kgf-cm/cm, or for example greater than or equal to 40 kgf·cm/cm, and for example less than or equal to 100 kgf-cm/cm, for example less than or equal to 90 kgf-cm/cm, for example less than or equal to 80 kgf·cm/cm, or for example less than or equal to 70 kgf-cm/cm, for example 30 to 100 kgf-cm/cm, for example 35 to 100 kgf·cm/cm, or for example 40 to 100 kgf-cm/cm, according to ASTM D256.

As such, the thermoplastic resin composition exhibits excellent friction noise reduction characteristics, antibacterial properties, and impact resistance and thus may be widely applied to various electronic parts, building materials, sporting goods, automobile interior/exterior parts, and specifically, the molded product is minimized from the stick-slip phenomenon and thus may be used in automobile interior materials requiring a large friction noise reduction, for example, an automobile air conditioner vent, a button of a car stereo, or the like but is not limited thereto.

Hereinafter, the present invention is illustrated in more detail with reference to examples and comparative examples. However, the following examples and comparative examples are provided for the purpose of descriptions and the present invention is not limited thereto.

## Examples 1 to 5 and Comparative Examples 1 to 7

The thermoplastic resin compositions of Examples 1 to 5 and Comparative Examples 1 to 7 were prepared according to the component content ratios described in Table 1.

In Table 1, (A), (B), and (C) which were included in the base resin, were expressed in weight percent based on the total weight and (D) and (E), which were added to the base resin, were expressed in parts by weight based on 100 parts by weight of the base resin.

A small amount of a heat stabilizer and a lubricant in an equal amount were dry-mixed with components shown in Table 1 and then, quantitatively and continuously added to a supply part (barrel temperature: 260 °C) of a twin-screw extruder (L/D = 44, Φ = 35 mm) for melting/kneading. Subsequently, a thermoplastic resin composition pelletized through the twin-screw extruder was dried at about 100 °C for about 2 hours and prepared into each specimen for evaluating physical properties, squeak noise, and antibacterial properties by using a 170.097g (6 oz) injection molding machine with a cylinder temperature of about 260 °C and a mold temperature of about 60 °C.

(Table 1)

| | | Ex. 1 | Ex. 2 | Ex. 3 | Ex. 4 | Ex. 5 | Comparative Ex. 1 | Comparative Ex. 2 | Comparative Ex. 3 | Comparative Ex. 4 | Comparative Ex. 5 | Comparative Ex. 6 | Comparative Ex. 7 |
|---|---|---|---|---|---|---|---|---|---|---|---|---|---|
| Base resin | (A) | 80 | 80 | 80 | 80 | 80 | 80 | 80 | 80 | 80 | 80 | 80 | 80 |
| | (B) | 10 | 10 | 10 | 10 | 10 | 10 | 10 | 10 | 10 | 10 | 10 | 10 |
| | (C) | 10 | 10 | 10 | 10 | 10 | 10 | 10 | 10 | 10 | 10 | 10 | 10 |

(continued)

| | | Ex. 1 | Ex. 2 | Ex. 3 | Ex. 4 | Ex. 5 | Comparative Ex. 1 | Comparative Ex. 2 | Comparative Ex. 3 | Comparative Ex. 4 | Comparative Ex. 5 | Comparative Ex. 6 | Comparative Ex. 7 |
|---|---|---|---|---|---|---|---|---|---|---|---|---|---|
| (D) | | 1 | 2 | 3 | 4 | 4 | 0 | 0.5 | 7 | 7 | 0 | 7 | 7 |
| (E) | | 3 | 3 | 4 | 4 | 5 | 0 | 0 | 0 | 2 | 2 | 3 | 10 |

Descriptions of each component in Table 1 are as follows.

(A) Polycarbonate Resin

A polycarbonate resin having a melt flow index (MI) of 13 g/10 min measured under the condition of 250 °C and a 10 kg load according to the ASTM D1238 standard (Lotte Advanced Materials Co., Ltd.)

(B) Acrylic Rubber Modified Aromatic Vinyl-Vinyl Cyanide Graft Copolymer

An acrylate-styrene-acrylonitrile graft copolymer having a core including about 50 wt% of an acrylic rubbery polymer with an average particle diameter of about 320 nm and a shell formed of a styrene-acrylonitrile copolymer with a styrene:acrylonitrile weight ratio of about 7:3 (Lotte Advanced Materials Co., Ltd.)

(C) Aromatic Vinyl-Vinyl Cyanide Copolymer

A styrene-acrylonitrile copolymer having a weight average molecular weight of about 150,000 g/mol and an acrylonitrile-derived component of about 24 wt% (Lotte Advanced Materials Co., Ltd.)

(D) Zinc Oxide

Zinc oxide having a specific gravity of 5.47 g/cm$^3$ to 5.64 g/cm$^3$, an average particle diameter (D50) of 1.2 μm, a BET specific surface area of 4 m$^2$/g, purity of 99%, a PL size ratio (B/A) of 0.28, and a crystallite size of 1,417 Å (Hanil Chemical Co., Ltd.)

(E) Polyolefin-Aromatic Vinyl-Glycidyl (meth)acrylate Graft Copolymer

A polyethylene-styrene-glycidyl methacrylate graft copolymer grafted with a styrene-glycidyl methacrylate copolymer to a polyethylene (PE) main chain (PEg-SGMA, NOF Corp.)

**Experimental Examples**

Experimental results are shown in Table 3 below.

Squeak noise: A specimen with a size of 100 mm × 100 mm × 3.2 mm (width × length × thickness) for evaluating squeak noises was measured with respect to squeak noises according to VDA 230-206 after allowed to stand in an about 80 °C oven for about 300 hours.

FIG. 1 is a schematic view of the basic principle of VDA 230-206. Referring to FIG. 1, Material A and Material B were the same materials heat-treated under the same condition, wherein Material A with a mobile phase due to a spring component moved relative to Material B. A force ($F_N$) applied to each other by the spring component was 40 **N,** a sliding carriage was moved at a moving speed ($V_s$) of 4 mm/s, and the two material specimens had a contact area of 1,250 mm$^2$. The spring component was moved by stick and slip, which was used to evaluate the squeak noises.

Table 2 shows evaluation criteria for the squeak noises, wherein as **RPN** was closer to 1, more excellent friction noise reduction characteristics were obtained.

(Table 2)

| PN | Rating | Meaning |
|---|---|---|
| 1 | OK | Material pair is safe. Audible noise development due to the stick-slip effect is not expected |
| 2 | OK | |
| 3 | OK | |
| 4 | Conditionally OK | Material pair is at threshold. Audible interference cannot be eliminated from the stick-slip effect |
| 5 | Conditionally OK | |
| 6 | Not okay | Material pair is critical with regard to stick-slip effect. Audible noises during relative movements must be expected |
| 7 | Not okay | |
| 8 | Not okay | |
| 9 | Not okay | |
| 10 | Not okay | |

Referring to Table 2, RPN 1 to 3 mean a state that there is almost no noise, and RPN 4 to 5 are limit points, which mean a state that noises are not removed by the stick-slip effect. In addition, RPN 6 to 10 mean a state that the stick-slip effect is clear, and noises necessarily occur.

(2) Antibacterial properties: According to a JIS Z 2801 antibacterial evaluation method, antibacterial activity was measured by inoculating Staphylococcus aureus and Escherichia coli to the specimens having a size of 45 mm × 45 mm × 3.2 mm (width × length × thickness) and culturing them at 35 °C under RH of 90 % for 24 hours.

(3) Impact resistance (unit: kgf-cm/cm): According to ASTM D256, 1/8" thick specimens were measured with respect to notched Izod Impact strength.

(Table 3)

| | | Examples | | | | | Comparative Examples | | | | | | |
|---|---|---|---|---|---|---|---|---|---|---|---|---|---|
| | | 1 | 2 | 3 | 4 | 5 | 1 | 2 | 3 | 4 | 5 | 6 | 7 |
| Squeak noise (RPN) | | 2 | 2 | 1 | 1 | 1 | 10 | 10 | 10 | 8 | 8 | 2 | 1 |
| Anti bact erial activ ity | Staphylo coccus aureus | 4.6 | 4.6 | 4.6 | 4.6 | 4.6 | 0 | 0 | 4.6 | 4.6 | 0 | 4.6 | 4.6 |
| | Escheric hia coli | 6.2 | 6.2 | 6.2 | 6.2 | 6.2 | 0.4 | 0.4 | 6.2 | 6.2 | 0.4 | 6.2 | 6.2 |
| valu e | | | | | | | | | | | | | |
| Impact resistance | | 38. 1 | 36. 9 | 35. 2 | 32. 9 | 31. 9 | 43. 6 | 42. 2 | 20. 8 | 14. 6 | 34. 5 | 12. 0 | 6.9 |

Referring to Tables 1 and 3, Examples 1 to 5 provided a thermoplastic resin composition exhibiting excellent friction noise reduction characteristics, antibacterial properties, and impact resistance by using the components in each optimal amount and a molded product using the same, compared with Comparative Examples 1 to 7.

## Claims

**1.** A thermoplastic resin composition, comprising a base resin including:

(A) 75 to 85 wt% of a polycarbonate resin;
(B) 7 to 13 wt% of an acrylic rubber modified aromatic vinyl-vinyl cyanide graft copolymer; and
(C) 7 to 13 wt% of an aromatic vinyl-vinyl cyanide copolymer,

wherein the amounts of (A), (B), and (C) are based on a total weight of the base resin, and

further comprising, based on 100 parts by weight of the base resin:

(D) 1 to 5 parts by weight of zinc oxide (ZnO); and
(E) 3 to 5 parts by weight of a polyolefin-aromatic vinyl-glycidyl (meth)acrylate graft copolymer.

**2.** The thermoplastic resin composition of claim 1, wherein the (A) polycarbonate resin has a weight average molecular weight of 10,000 to 200,000 g/mol,
wherein the weight average molecular weight is measured according to the method outlined in the description.

**3.** The thermoplastic resin composition of claim 1 or claim 2, wherein in the (B) acrylic rubber modified aromatic vinyl-vinyl cyanide graft copolymer, an average particle diameter of the acrylic rubbery polymer is 200 to 500 nm, and preferably, the (B) acrylic rubber modified aromatic vinyl-vinyl cyanide graft copolymer has a core-shell structure includes a core including an acrylic rubbery polymer and a shell formed by graft polymerization of a monomer mixture including an aromatic vinyl compound and a vinyl cyanide compound to the core,
wherein the average particle diameter is measured according to the method outlined in the description.

**4.** The thermoplastic resin composition of any one of claim 1 to claim 3, wherein the (B) acrylic rubber modified aromatic vinyl-vinyl cyanide graft copolymer is an acrylate-styrene-acrylonitrile graft copolymer.

**5.** The thermoplastic resin composition of any one of claim 1 to claim 4, wherein the (C) aromatic vinyl-vinyl cyanide copolymer is a copolymer of a monomer mixture including 60 to 80 wt% of an aromatic vinyl compound and 20 to 40 wt% of a vinyl cyanide compound, and preferably, the (C) aromatic vinyl-vinyl cyanide copolymer has a weight average molecular weight of 80,000 to 200,000 g/mol,
wherein the weight average molecular weight is measured according to the method outlined in the description.

**6.** The thermoplastic resin composition of any one of claim 1 to claim 5, wherein the (C) aromatic vinyl-vinyl cyanide copolymer is a styrene-acrylonitrile copolymer.

**7.** The thermoplastic resin composition of any one of claim 1 to claim 6, wherein the (D) zinc oxide has an average particle diameter of 0.5 to 3 $\mu$m, and preferably,the (D) zinc oxide has a BET specific surface area of 1 to 10 $m^2$/g,

wherein the average particle diameter of the (D) zinc oxide is measured according to the method outlined in the description,
wherein the BET specific surface area is measured according to the method outlined in the description.

**8.** The thermoplastic resin composition of any one of claim 1 to claim 7, wherein the (D) zinc oxide has a peak position 2$\theta$ value of 35 to 37° in X-ray diffraction (XRD) analysis, and a crystallite size value according to Equation 1 of 1,000 to 2,000 Å, and preferably, the (D) zinc oxide has a size ratio (B/A) of a peak A in a 370 to 390 nm region to a peak B in a 450 to 600 nm region of 0.01 to 1 when measuring photoluminescence,
wherein the photoluminescence is measured according to the method outlined in the description,

[Equation 1]

$$\text{Crystallite size(D)} = \frac{k\lambda}{\beta\cos\theta}$$

wherein, in Equation 1, k is a shape factor, $\lambda$ is an X-ray wavelength, $\beta$ is a FWHM value (degree) of an X-ray diffraction peak, and $\theta$ is a peak position value (peak position degree).

**9.** The thermoplastic resin composition of any one of claim 1 to claim 8, wherein the (E) polyolefin-aromatic vinyl-glycidyl (meth)acrylate graft copolymer is one in which an aromatic vinyl-glycidyl (meth)acrylate copolymer is grafted to a polyolefin main chain.

**10.** The thermoplastic resin composition of claim 9, wherein the polyolefin is a polyethylene (PE) or an ethylene-vinyl acetate copolymer (EVA) and the aromatic vinyl-glycidyl (meth)acrylate copolymer is a styrene-glycidyl methacrylate copolymer.

**11.** The thermoplastic resin composition of any one of claim 1 to claim 10, wherein the thermoplastic resin composition further includes at least one additive selected from a nucleating agent, a coupling agent, a filler, a plasticizer, a lubricant, a release agent, an antibacterial agent, a heat stabilizer, an antioxidant, an ultraviolet (UV) stabilizer, a flame retardant, an antistatic agent, an impact modifier, a dye, and a pigment.

**12.** A molded product manufactured from the thermoplastic resin composition according to any one of claims 1 to 11.

**13.** The molded product of claim 12, wherein the molded product has a squeak noise of 1 to 4 measured after being left at 80 °C for 300 hours according to VDA 230-206.

**14.** The molded product of claim 12 or claim 13, wherein the molded product has each antibacterial activity value of 2 to 7 which is obtained by inoculating Staphylococcus aureus and Escherichia coli, and measuring after 24 hours of incubation under the condition of 35 °C and RH of 90 % according to the JIS Z 2801 antibacterial evaluation method.

**15.** The molded product of any one of claim 12 to claim 14, wherein the molded product has a 0.3175 cm (1/8" - inch) thick notched Izod impact strength of 294.2 to 980.67 N.cm/cm (30 to 100 kgf.cm/cm) according to ASTM D256.

**Patentansprüche**

**1.** Thermoplastische Harzzusammensetzung, umfassend ein Basisharz, einschließlich:

(A) 75 bis 85 Gew.-% eines Polycarbonatharzes;
(B) 7 bis 13 Gew.-% eines aromatischen Vinyl-Vinylcyanid-PfropfCopolymers aus Acrylkautschuk; und
(C) 7 bis 13 Gew.-% eines aromatischen Vinyl-Vinylcyanid-Copolymers,

wobei die Mengen von (A), (B) und (C) auf einem Gesamtgewicht des Basisharzes basieren, und ferner umfassend, basierend auf 100 Gewichtsteilen des Basisharzes:

(D) 1 bis 5 Gewichtsteile Zinkoxid (ZnO); und
(E) 3 bis 5 Gewichtsteile eines polyolefin-aromatischen Vinylglycidyl-(Meth)acrylat-Pfropf-Copolymers.

**2.** Thermoplastische Harzzusammensetzung nach Anspruch 1, wobei das (A) Polycarbonatharz ein gewichtsdurchschnittliches Molekulargewicht von 10.000 bis 200.000 g/mol aufweist,
wobei das gewichtsdurchschnittliche Molekulargewicht gemäß dem in der Beschreibung beschriebenen Verfahren gemessen wird.

**3.** Thermoplastische Harzzusammensetzung nach Anspruch 1 oder 2, wobei in dem (B) aromatischen Vinyl-Vinylcyanid-Pfropf-Copolymer aus Acrylkautschuk ein durchschnittlicher Partikeldurchmesser des Acrylkautschukpolymers 200 bis 500 nm beträgt, und vorzugsweise, das (B) aromatische Vinyl-Vinylcyanid-Pfropf-Copolymer aus Acrylkautschuk eine Kern-Schalen-Struktur aufweist, die einen Kern einschließlich eines Acrylkautschukpolymers und einer Schale umfasst, die durch Pfropfpolymerisation einer Monomermischung einschließlich einer aromatischen Vinylverbindung und einer Vinylcyanidverbindung zum Kern gebildet wird,
wobei der durchschnittliche Partikeldurchmesser gemäß dem in der Beschreibung beschriebenen Verfahren gemessen wird.

**4.** Thermoplastische Harzzusammensetzung nach einem der Ansprüche 1 bis 3, wobei das (B) aromatische Vinyl-Vinylcyanid-Pfropf-Copolymer aus Acrylkautschuk ein Acrylat-Styrol-Acrylonitril-Pfropf-Copolymer ist.

**5.** Thermoplastische Harzzusammensetzung nach einem der Ansprüche 1 bis 4, wobei das (C) aromatische Vinyl-Vinylcyanid-Copolymer ein Copolymer einer Monomermischung ist, die 60 bis 80 Gew.-% einer aromatischen Vinylverbindung und 20 bis 40 Gew.-% einer Vinylcyanidverbindung umfasst, und vorzugsweise das (C) aromatische Vinyl-Vinylcyanid-Copolymer ein gewichtsdurchschnittliches Molekulargewicht von 80.000 bis 200.000 g/mol aufweist,
wobei das gewichtsdurchschnittliche Molekulargewicht gemäß dem in der Beschreibung beschriebenen Verfahren gemessen wird.

**6.** Thermoplastische Harzzusammensetzung nach einem der Ansprüche 1 bis 5, wobei das (C) aromatische Vinyl-Vinylcyanid-Copolymer ein Styrol-Acrylonitril-Copolymer ist.

**7.** Thermoplastische Harzzusammensetzung nach einem der Ansprüche 1 bis 6, wobei das (D) Zinkoxid einen durchschnittlichen Partikeldurchmesser von 0,5 bis 3 μm aufweist, und

vorzugsweise das (D) Zinkoxid eine BET-spezifische Oberflächenfläche von 1 bis 10 $m^2$/g aufweist, wobei der mittlere Partikeldurchmesser des (D) Zinkoxids nach dem in der Beschreibung beschriebenen Verfahren gemessen wird,
wobei die BET-spezifische Fläche gemäß dem in der Beschreibung beschriebenen Verfahren gemessen wird.

**8.** Thermoplastische Harzzusammensetzung nach einem der Ansprüche 1 bis 7, wobei das (D) Zinkoxid einen Peakpositionswert 2θ von 35 bis 37° in der Röntgenbeugungsanalyse (XRD) und einen Kristallitgrößenwert nach Gleichung 1 von 1.000 bis 2.000 Å aufweist, und vorzugsweise das (D) Zinkoxid ein Größenverhältnis (B/A) von einem Peak A in einem 370 bis 390 nm-Bereich zu einem Peak B in einem 450 bis 600 nm-Bereich von 0,01 bis 1 bei der Photolumineszenzmessung aufweist,
wobei die Photolumineszenz gemäß dem in der Beschreibung beschriebenen Verfahren gemessen wird,

[Gleichung 1]

$$\text{Kristallitgröße (D)} = \frac{\kappa\lambda}{\beta cos\theta}$$

wobei in Gleichung 1, k ein Formfaktor, λ eine Röntgenwellenlänge, β ein FWHM-Wert (-Grad) eines Röntgenbeugungspeaks und θ ein Peakpositionswert (Peakpositionsgrad) ist.

**9.** Thermoplastische Harzzusammensetzung nach einem der Ansprüche 1 bis 8, wobei das (E) polyolefin-aromatische Vinyl-Glycidyl-(Meth)acrylat-Pfropf-Copolymer ein Copolymer ist, bei dem ein aromatisches Vinyl-Glycidyl(Meth) acrylat-Copolymer in eine Polyolefin-Hauptkette gepfropft wird.

**10.** Thermoplastische Harzzusammensetzung nach Anspruch 9, wobei das Polyolefin ein Polyethylen (PE) oder ein Ethylen-Vinylacetat-Copolymer (EVA) und das aromatische Vinyl-Glycidyl-(Meth)acrylat-Copolymer ein Styrol-Glycidyl-Methacrylat-Copolymer ist.

**11.** Thermoplastische Harzzusammensetzung nach einem der Ansprüche 1 bis 10, wobei die thermoplastische Harzzusammensetzung ferner mindestens ein Additiv enthält, das aus einem Keimbildner, einem Haftvermittler, einem Füllstoff, einem Weichmacher, einem Gleitmittel, einem Trennmittel, einem antibakteriellen Mittel, einem Hitzestabilisator, einem Antioxidationsmittel, einem UV-Stabilisator, einem Flammschutzmittel, einem antistatischen Mittel, einem Schlagzähigkeitsmodifikator, einem Farbstoff und einem Pigment ausgewählt ist.

**12.** Formprodukt, das aus der thermoplastischen Harzzusammensetzung nach einem der Ansprüche 1 bis 11 hergestellt ist.

**13.** Formprodukt nach Anspruch 12, wobei das Formprodukt ein Quietschgeräusch von 1 bis 4 aufweist, gemessen nach 300 Stunden Belassen bei 80 °C nach VDA 230-206.

**14.** Formprodukt nach Anspruch 12 oder 13, wobei das Formprodukt jeden antibakteriellen Aktivitätswert von 2 bis 7 aufweist, der durch Inokulation von Staphylococcus aureus und Escherichia coli und Messung nach 24 Stunden Inkubation unter der Bedingung von 35 °C und einer relativen Luftfeuchtigkeit von 90 % gemäß dem antibakteriellen Bewertungsverfahren JIS Z 2801 erhalten wird.

**15.** Formprodukt nach einem der Ansprüche 12 bis 14, wobei das Formprodukt eine 0,3175 cm (1/8 Zoll)

dick gekerbte Izod-Schlagzähigkeit von 294,2 bis 980,67 N.cm/cm (30 bis 100 kgf.cm/cm) aufweist.
gemäß ASTM D256.

**Revendications**

1. Composition de résine thermoplastique, comprenant une résine de base incluant :

    (A) 75 à 85% en poids d'une résine de polycarbonate ;
    (B) 7 à 13% en poids d'un copolymère greffé de vinyle aromatique-cyanure de vinyle modifié par du caoutchouc acrylique ; et
    (C) 7 à 13% en poids d'un copolymère de vinyle aromatique-cyanure de vinyle,

    dans laquelle les quantités de (A), (B) et (C) sont basées sur un poids total de la résine de base, et comprenant en outre, par rapport à 100 parties en poids de la résine de base :

    (D) 1 à 5 parties en poids d'oxyde de zinc (ZnO) ; et
    (E) 3 à 5 parties en poids d'un copolymère greffé de polyoléfine-vinyle aromatique(méth)acrylate de glycidyle.

2. Composition de résine thermoplastique de la revendication 1, dans laquelle la résine de polycarbonate (A) présente un poids moléculaire moyen en poids allant de 10000 à 200000 g/mol,
dans laquelle le poids moléculaire moyen en poids est mesuré selon la méthode décrite dans la description.

3. Composition de résine thermoplastique de la revendication 1 ou 2, dans laquelle dans le copolymère greffé de vinyle aromatique-cyanure de vinyle modifié par du caoutchouc acrylique (B), un diamètre moyen de particule du polymère caoutchouteux acrylique varie de 200 à 500 nm, et de préférence, le copolymère greffé de vinyle aromatique-cyanure de vinyle modifié par du caoutchouc acrylique (B) présente une structure noyau-enveloppe comprenant un noyau incluant un polymère caoutchouteux acrylique et une enveloppe formée par polymérisation par greffage d'un mélange de monomères incluant un composé de vinyle aromatique et un composé de cyanure de vinyle sur le noyau,
dans laquelle le diamètre moyen de particule est mesuré selon la méthode décrite dans la description.

4. Composition de résine thermoplastique de l'une quelconque des revendications 1 à 3, dans laquelle le copolymère greffé de vinyle aromatique-cyanure de vinyle modifié par du caoutchouc acrylique (B) est un copolymère greffé d'acrylate-styrène-acrylonitrile.

5. Composition de résine thermoplastique de l'une quelconque des revendications 1 à 4, dans laquelle le copolymère de vinyle aromatique-cyanure de vinyle (C) est un copolymère d'un mélange de monomères incluant 60 à 80% en poids d'un composé de vinyle aromatique et 20 à 40% en poids d'un composé de cyanure de vinyle, et de préférence, le copolymère de vinyle aromatique-cyanure de vinyle (C) présente un poids moléculaire moyen en poids allant de 80000 à 200000 g/mol,
dans laquelle le poids moléculaire moyen en poids est mesuré selon la méthode décrite dans la description.

6. Composition de résine thermoplastique de l'une quelconque des revendications 1 à 5, dans laquelle le copolymère de vinyle aromatique-cyanure de vinyle (C) est un copolymère de styrène-acrylonitrile.

7. Composition de résine thermoplastique de l'une quelconque des revendications 1 à 6, dans laquelle l'oxyde de zinc (D) présente un diamètre moyen de particule allant de 0,5 à 3 $\mu$m, et de préférence, l'oxyde de zinc (D) présente une surface spécifique **BET** allant de 1 à 10 $m^2$/g,

    dans laquelle le diamètre moyen de particule de l'oxyde de zinc (D) est mesuré selon la méthode décrite dans la description, et
    dans laquelle la surface spécifique **BET** est mesurée selon la méthode décrite dans la description.

8. Composition de résine thermoplastique de l'une quelconque des revendications 1 à 7, dans laquelle l'oxyde de zinc (D) présente une valeur de position de pic $2\theta$ allant de 35 à 37° lors d'une analyse par diffraction des rayons X (XRD), et une valeur de taille de cristallite selon l'Équation 1 allant de 1000 à 2000 Å, et de préférence, l'oxyde de zinc (D) présente un rapport de taille (B/A) d'un pic A dans une région de 370 à 390 nm sur un pic B dans une région de 450 à 600 nm allant de 0,01 à 1 lors de la mesure de la photoluminescence,
dans laquelle la photoluminescence est mesurée selon la méthode décrite dans la description,

[Équation 1]

$$\text{Taille de cristallite (D)} = \frac{k\lambda}{\beta \cos\theta}$$

dans laquelle, dans l'Équation 1, k est un facteur de forme, $\lambda$ est une longueur d'onde des rayons X, $\beta$ est une valeur FWHM (degré) d'un pic de diffraction des rayons X, et $\theta$ est une valeur de position de pic (degré de position de pic).

**9.** Composition de résine thermoplastique de l'une quelconque des revendications 1 à 8, dans laquelle le copolymère greffé de polyoléfine-vinyle aromatique-(méth)acrylate de glycidyle (E) est un copolymère dans lequel un copolymère de vinyle aromatique-(méth)acrylate de glycidyle est greffé sur une chaîne principale de polyoléfine.

**10.** Composition de résine thermoplastique de la revendication 9, dans laquelle la polyoléfine est un polyéthylène (PE) ou un copolymère d'éthylène-acétate de vinyle (EVA) et le copolymère de vinyle aromatique-(méth)acrylate de glycidyle est un copolymère de styrène-méthacrylate de glycidyle.

**11.** Composition de résine thermoplastique de l'une quelconque des revendications 1 à 10, dans laquelle la composition de résine thermoplastique inclut en outre au moins un additif choisi parmi un agent de nucléation, un agent de couplage, une charge, un plastifiant, un lubrifiant, un agent de démoulage, un agent antibactérien, un stabilisant thermique, un antioxydant, un stabilisant ultraviolet (UV), un ignifuge, un agent antistatique, un modificateur d'impact, un colorant et un pigment.

**12.** Produit moulé fabriqué à partir de la composition de résine thermoplastique selon l'une quelconque des revendications 1 à 11.

**13.** Produit moulé de la revendication 12, dans lequel le produit moulé présente un bruit de grincement allant de 1 à 4, mesuré après avoir été laissé à 80°C pendant 300 heures selon la norme VDA 230-206.

**14.** Produit moulé de la revendication 12 ou 13, dans lequel le produit moulé présente une valeur d'activité antibactérienne allant de 2 à 7 qui est obtenue par inoculation de Staphylococcus aureus et d'Escherichia coli, et mesure après 24 heures d'incubation dans une condition de 35°C et de 90% d'humidité relative, conformément à la méthode d'évaluation antibactérienne JIS Z 2801.

**15.** Produit moulé de l'une quelconque des revendications 12 à 14, dans lequel le produit moulé présente une résistance aux chocs Izod sur barreau entaillé à une épaisseur de 0,3175 cm (1/8" pouce) allant de 294,2 à 980,67 N.cm/cm (30 à 100 kgf.cm/cm) conformément à la norme ASTM D256.

【Figure 1】

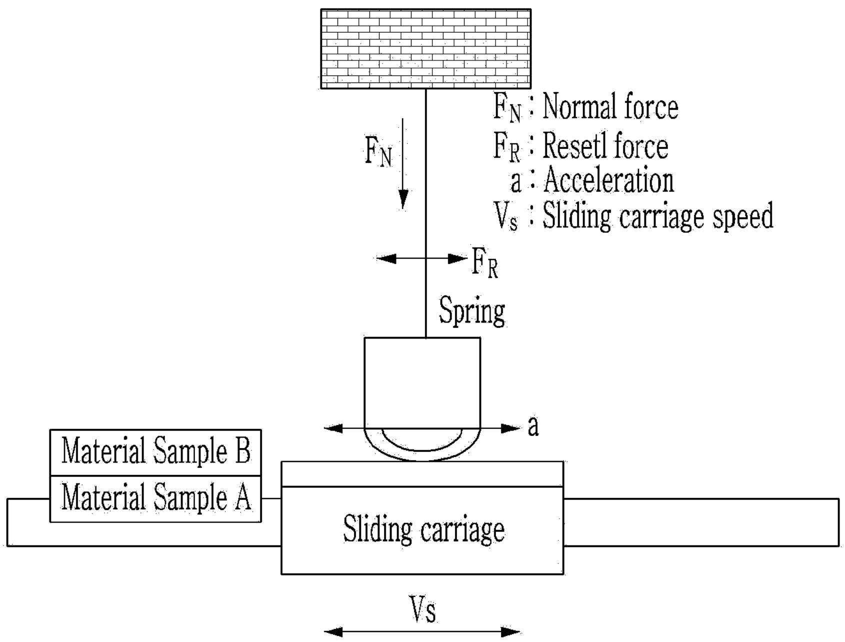
$F_N$ : Normal force
$F_R$ : Resetl force
a : Acceleration
$V_s$ : Sliding carriage speed
$F_N$
$F_R$
Spring
a
Material Sample B
Material Sample A
Sliding carriage
Vs

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020170086074 A
- CN 101899204 A